# EUROPEAN PATENT APPLICATION

(11) **EP 4 340 420 A1**
(43) Date of publication of application: **20.03.2024**
(21) Application number: 21941409.1
(22) Date of filing: 14.05.2021
(51) Int. Cl.: H04W 8/24

(54) **CONFIGURATION METHOD, ALLOCATION METHOD, APPARATUSES, DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: XU, Yang, Dongguan, Guangdong 523860 (CN); YANG, Ning, Dongguan, Guangdong 523860 (CN); SHI, Cong, Dongguan, Guangdong 523860 (CN); CHEN, Jingran, Dongguan, Guangdong 523860 (CN)
(74) Representative: Kraus & Lederer PartGmbB
(86) International application number: PCT/CN2021/093964
(87) International publication number: WO 2022/236840

(57) **Abstract**

The present disclosure relates to communication technology, and provides a configuration method, an allocation method, an apparatus, a device, and a storage medium. The method includes: a network device transmitting configuration information to a terminal device. The configuration information includes: an identifier of a first AI service, and first domain information corresponding to the first AI service. The first domain information corresponding to the first AI service refers to information related to a first domain for executing the first AI service. With the embodiments of the present disclosure, the network device configures information related to a first domain for a specific service for the terminal device, such that the terminal device can subsequently initiate a process for joining the first domain for the specific service, which provides basis for the terminal device to participate in data analysis corresponding to the specific service.

## Description

### TECHNICAL FIELD

The present disclosure relates to communication technology, and more particularly, to a configuration method, an allocation method, an apparatus, a device, and a storage medium.

### BACKGROUND

In order to improve the effect of big data analysis, the 3rd Generation Partnership Project (3GPP) considers using a multi-level Artificial Intelligence (AI) / Machine Learning (ML) approach. That is, the work of big data analysis can be divided between a terminal device and a network device on a network side.

A typical division of work is that the terminal device performs a part of operations on the data to form intermediate data, and then sends the intermediate data to the network device via a mobile network for further calculation. Based on the situation where the devices participating in the big data analysis include a plurality of terminal devices, there are many options for division of work in the big data analysis, including at least three options: a centralized scenario, a fully distributed scenario, and a hybrid scenario. Here, the centralized scenario means that all terminal devices report the data required for big data analysis to the network device, and then the network device performs the analysis work for big data analysis. The fully distributed scenario means that different terminal devices analyze collected data locally. The hybrid scenario means that terminal devices perform a part of analysis on collected data locally, and sends the analysis results to the network device, and then the network device performs further calculation and analysis. In addition, for the fully distributed scenario and the hybrid scenario, the data and results of big data analysis may be exchanged between different terminal devices.

Based on this, the terminal device may obtain different AI/MI, models and calculation work in division of work according to the requirements of big data analysis, and interact with the network device the calculation results within the required time. Therefore, further discussion and research is needed on how to divide the work of big data analysis for the terminal device and how to determine resources required for the terminal device to complete big data analysis.

### SUMMARY

The embodiments of the present disclosure provide a configuration method, an allocation method, an apparatus, a device, and a storage medium. The technical solutions are as follows.

In an aspect, an embodiment of the present disclosure provides a configuration method. The method is applied in a terminal device and includes:

receiving configuration information from a network device, the configuration information including at least one of: an identifier of a first Artificial Intelligence (AI) service or first domain information corresponding to the first AI service.

The first domain information corresponding to the first AI service is information related to a first domain for executing the first AI service.

In another aspect, an embodiment of the present disclosure provides a configuration method. The method is applied in a network device and includes:

transmitting configuration information to a terminal device, the configuration information including at least one of: an identifier of a first Artificial Intelligence (AI) service or first domain information corresponding to the first AI service.

The first domain information corresponding to the first AI service is information related to a first domain for executing the first AI service.

In another aspect, an embodiment of the present disclosure provides an allocation method. The method is applied in a terminal device and includes:
transmitting a first request to a network device, the first request being used to request to join a first domain for executing a third Artificial Intelligence (AI) service; and
receiving allocation information from the network device.

In another aspect, an embodiment of the present disclosure provides an allocation method. The method is applied in a network device and includes:
receiving a first request from a terminal device, the first request being used to request to join a first domain for executing a third Artificial Intelligence (AI) service; and
transmitting allocation information to the terminal device.

In another aspect, an embodiment of the present disclosure provides a configuration apparatus. The apparatus is applied in a terminal device and includes:
a configuration information receiving module configured to receive configuration information from a network device, the configuration information including at least one of: an identifier of a first Artificial Intelligence (AI) service or first domain information corresponding to the first AI service.

The first domain information corresponding to the first AI service is information related to a first domain for executing the first AI service.

In another aspect, an embodiment of the present disclosure provides a configuration apparatus. The apparatus is applied in a network device and includes:
a configuration information transmitting module configured to transmit configuration information to a terminal device, the configuration information including at least one of: an identifier of a first Artificial Intelligence (AI) service or first domain information corresponding to the first AI service.

The first domain information corresponding to the first AI service is information related to a first domain for executing the first AI service.

In another aspect, an embodiment of the present disclosure provides an allocation apparatus. The apparatus is applied in a terminal device and includes:
a first request transmitting module configured to transmit a first request to a network device, the first request being used to request to join a first domain for executing a third Artificial Intelligence (AI) service; and
an allocation information receiving module configured to receive allocation information from the network device.

In another aspect, an embodiment of the present disclosure provides an allocation apparatus. The apparatus is applied in a network device and includes:
a first request receiving module configured to receive a first request from a terminal device, the first request being used to request to join a first domain for executing a third Artificial Intelligence (AI) service; and
an allocation information transmitting module configured to transmit allocation information to the terminal device.

In another aspect, an embodiment of the present disclosure provides a terminal device. The terminal device includes a processor and a transceiver connected to the processor.

The transceiver is configured to receive configuration information from a network device, the configuration information including at least one of: an identifier of a first Artificial Intelligence (AI) service or first domain information corresponding to the first AI service.

The first domain information corresponding to the first AI service is information related to a first domain for executing the first AI service.

In another aspect, an embodiment of the present disclosure provides a network device. The network device includes a processor and a transceiver connected to the processor.

The transceiver is configured to transmit configuration information to a terminal device, the configuration information including at least one of: an identifier of a first Artificial Intelligence (AI) service or first domain information corresponding to the first AI service.

The first domain information corresponding to the first AI service is information related to a first domain for executing the first AI service.

In another aspect, an embodiment of the present disclosure provides a terminal device. The terminal device includes a processor and a transceiver connected to the processor.

The transceiver is configured to transmit a first request to a network device, the first request being used to request to join a first domain for executing a third Artificial Intelligence (AI) service.

The transceiver is further configured to receive allocation information from the network device.

In another aspect, an embodiment of the present disclosure provides a network device. The network device includes a processor, and a transceiver connected to the processor.

The transceiver is configured to receive a first request from a terminal device, the first request being used to request to join a first domain for executing a third Artificial Intelligence (AI) service.

The transceiver is configured to transmit allocation information to the terminal device.

In another aspect, according to an embodiment of the present disclosure, a computer-readable storage medium is provided. The storage medium has a computer program stored therein. The computer program is configured to be executed by a processor in a terminal device to perform the above configuration method in the terminal device.

In another aspect, according to an embodiment of the present disclosure, a computer-readable storage medium is provided. The storage medium has a computer program stored therein. The computer program is configured to be executed by a processor in a network device to perform the above configuration method in the network device.

In another aspect, according to an embodiment of the present disclosure, a computer-readable storage medium is provided. The storage medium has a computer program stored therein. The computer program is configured to be executed by a processor in a terminal device to perform the above allocation method in the terminal device.

In another aspect, according to an embodiment of the present disclosure, a computer-readable storage medium is provided. The storage medium has a computer program stored therein. The computer program is configured to be executed by a processor in a network device to perform the above allocation method in the network device.

In another aspect, according to an embodiment of the present disclosure, a chip is provided. The chip includes a programmable logic circuit and/or program instructions. When the chip runs on a terminal device, it is configured to perform the above configuration method in the terminal device.

In another aspect, according to an embodiment of the present disclosure, a chip is provided. The chip includes a programmable logic circuit and/or program instructions. When the chip runs on a network device, it is configured to perform the above configuration method in the network device.

In another aspect, according to an embodiment of the present disclosure, a chip is provided. The chip includes a programmable logic circuit and/or program instructions. When the chip runs on a terminal device, it is configured to perform the above allocation method in the terminal device.

In another aspect, according to an embodiment of the present disclosure, a chip is provided. The chip includes a programmable logic circuit and/or program instructions. When the chip runs on a network device, it is configured to perform the above allocation method in the network device.

In another aspect, according to an embodiment of the present disclosure, a computer program product is provided. The computer program is configured to, when running on a terminal device, perform the above configuration method in the terminal device.

In another aspect, according to an embodiment of the present disclosure, a computer program product is provided. The computer program is configured to, when running on a network device, perform the above configuration method in the network device.

In another aspect, according to an embodiment of the present disclosure, a computer program product is provided. The computer program is configured to, when running on a terminal device, perform the above allocation method in the terminal device.

In another aspect, according to an embodiment of the present disclosure, a computer program product is provided. The computer program is configured to, when running on a network device, perform the above allocation method in the network device.

The technical solutions according to the embodiments of the present disclosure may include the following advantageous effects.

The network device configures information related to a first domain for a specific service for the terminal device, such that the terminal device can subsequently initiate a process for joining the first domain for the specific service, which provides basis for the terminal device to participate in data analysis corresponding to the specific service.

When the terminal device requests the network device for joining the first domain for executing the specific service, the network device allocates various resources required for the terminal device to participate in calculation of the specific service, such that the terminal device can execute the specific service.

### BRIEF DESCRIPTION OF DRAWINGS

In order to illustrate the technical solutions in the embodiments of the present disclosure more clearly, the figures needed to be used in the description of the embodiments will be briefly introduced below. Obviously, the figures in the following description are only some embodiments of the present disclosure. For those of ordinary skill in the art, other figures can also be obtained based on these drawings without inventive efforts.
FIG. 1 is a schematic diagram showing division of work in big data analysis according to an embodiment of the present disclosure;
FIG. 2 is a schematic diagram showing a scenario of division of work in big data analysis according to an embodiment of the present disclosure;
FIG. 3 is a schematic diagram showing a scenario of division of work in big data analysis according to another embodiment of the present disclosure;
FIG. 4 is a schematic diagram showing a scenario of division of work in big data analysis according to yet another embodiment of the present disclosure;
FIG. 5 is a schematic diagram showing a communication system according to an embodiment of the present disclosure;
FIG. 6 is a flowchart illustrating a configuration method according to an embodiment of the present disclosure;
FIG. 7 is a flowchart illustrating a configuration method according to another embodiment of the present disclosure;
FIG. 8 is a flowchart illustrating an allocation method according to an embodiment of the present disclosure;
FIG. 9 is a schematic diagram showing content of allocation information according to an embodiment of the present disclosure;
FIG. 10 is a flowchart illustrating an allocation method according to another embodiment of the present disclosure;
FIG. 11 is a block diagram of a configuration apparatus according to an embodiment of the present disclosure;
FIG. 12 is a block diagram of a configuration apparatus according to another embodiment of the present disclosure;
FIG. 13 is a block diagram of a configuration apparatus according to yet another embodiment of the present disclosure;
FIG. 14 is a block diagram of a configuration apparatus according to another embodiment of the present disclosure;
FIG. 15 is a block diagram of an allocation apparatus according to an embodiment of the present disclosure;
FIG. 16 is a block diagram of an allocation apparatus according to another embodiment of the present disclosure;
FIG. 17 is a block diagram of an allocation apparatus according to yet another embodiment of the present disclosure;
FIG. 18 is a block diagram of an allocation apparatus according to still another embodiment of the present disclosure;
FIG. 19 is a block diagram showing a structure of a terminal device according to an embodiment of the present disclosure; and
FIG. 20 is a block diagram showing a structure of a network device according to an embodiment of the present disclosure.

### DESCRIPTION OF EMBODIMENTS

The embodiments of the present disclosure will be further described in detail below with reference to the accompanying drawings, such that the objects, technical solutions, and advantages of the present disclosure will become more apparent.

The network architecture and service scenario described in the embodiments of the present disclosure are provided for illustrating the technical solutions of the embodiments of the present disclosure more clearly, and do not constitute limitations on the technical solutions according to the embodiments of the present disclosure. With the evolution of the technology and the emergence of new service scenarios, the technical solutions provided in the embodiments of the present disclosure are also applicable to similar technical problems.

In order to improve the effect of big data analysis, the 3GPP considers using a multi-level AI/MI, approach. That is, the work of big data analysis can be divided between a terminal device and a network device on a network side.

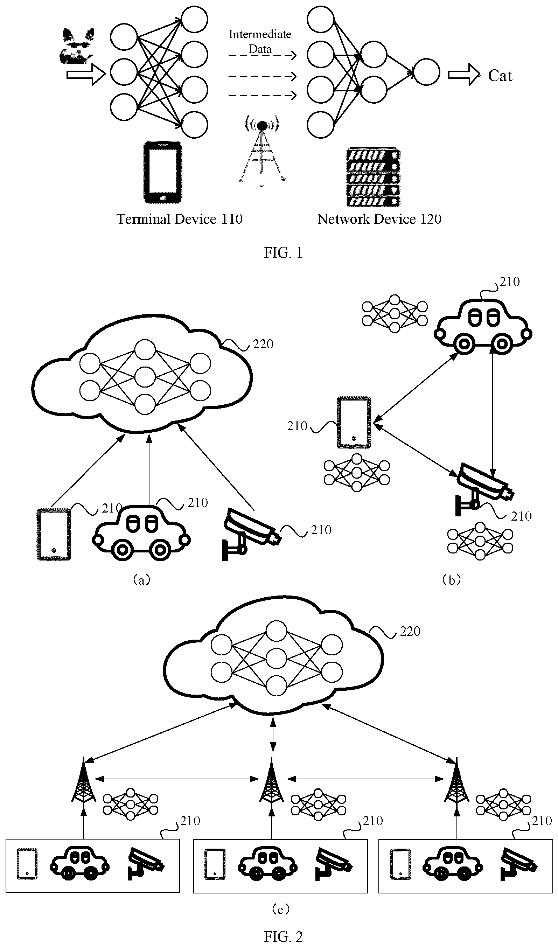

As shown in FIG. 1, a typical division of work is that a terminal device 110 performs a part of operations on data to form intermediate data, and then sends the intermediate data to a network device 120 via a mobile network for further calculation. Based on the situation where the devices participating in the big data analysis include a plurality of terminal devices, there are many options for division of work in the big data analysis, including at least three options: a centralized scenario, a fully distributed scenario, and a hybrid scenario. Here, as shown in FIG. 2(a), the centralized scenario means that all terminal devices 210 report the data required for big data analysis to the network device 220, and then the network device 220 performs the analysis work for big data analysis. As shown in FIG. 2(b), the fully distributed scenario means that different terminal devices 210 analyze collected data locally. As shown in FIG. 2(c), the hybrid scenario means that terminal devices 210 perform a part of analysis on collected data locally, and sends the analysis results to the network device 220, and then the network device 220 performs further calculation and analysis. In addition, for the fully distributed scenario and the hybrid scenario, the data and results of big data analysis may be exchanged between different terminal devices.

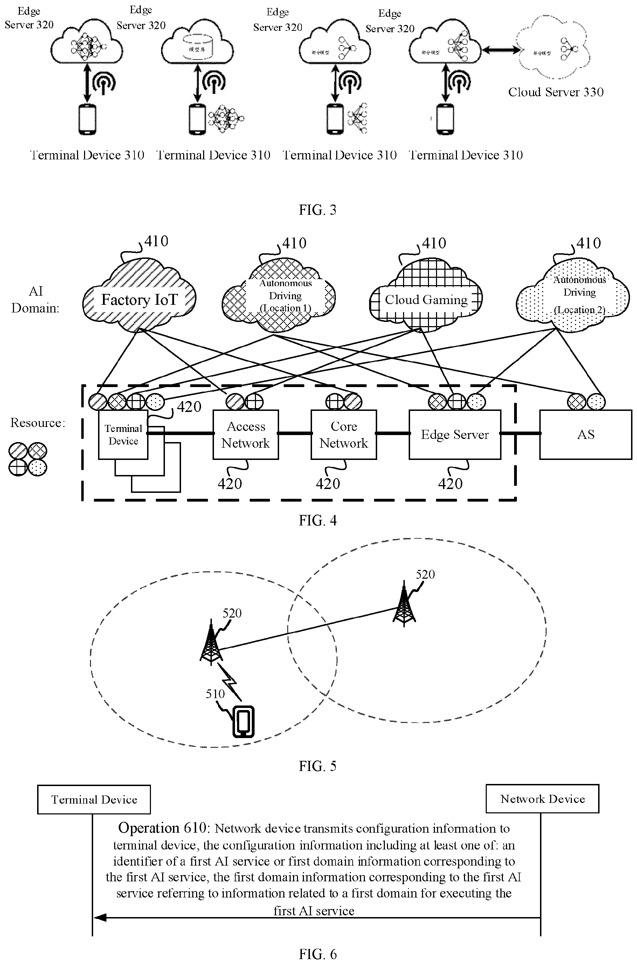

For example, as shown in FIG. 3, the big data analysis can be performed by one or more or all of a terminal device 310, an edge server 320, and a cloud server 330. Based on this, the terminal device may obtain different AI/MI, models and calculation work in division of work according to the requirements of big data analysis, and interact with the network device the calculation results within the required time.

As can be seen from the above embodiments, communication between the terminal device and the network device is required to ensure the exchange of data. The quality of communication is very important at this time, because if the terminal device cannot send the calculated data to the network device in time, then the network device may need to keep waiting, causing waste of computing resources and difficulty in achieving optimal efficiency of big data analysis.

Here, for training or inference of an AI model, the actual execution behavior needs to consider at least one of the following issues: data limitation, inference result limitation, resource allocation limitation, or model effectiveness limitation.

The data limitation means to whom the data can be opened and to whom the data is valuable.

The inference result means to whom the AI-based inference result is to be applied, and to what condition and scope the AI-based inference result is to be applied.

The resource allocation limitation means how to divide communication, storage, computing power and other resources to support different AI services.

The model effectiveness limitation means which terminal devices and scenarios the trained model is suitable for.

Therefore, AI behaviors in the 6^{th} Generation (6G) mobile communication networks are constrained and closed. In order to accurately define the scope that AI behaviors can work and serve, so as to make full use of 6G network resources to perform AI-related services in various industries, a first domain is introduced in the embodiment of the present disclosure for division. In other words, the above constraints and limitations can be defined and described within a specific first domain. In the following, the technical solutions according to the present disclosure will be introduced and explained with reference to several embodiments.

First, the first domain involved in the embodiment of the present disclosure will be introduced and explained.

The first domain is a resource division barrier, including at least one of: at least one service node for executing a specific AI service or resources corresponding to each service node. In some embodiments, the first domain performs overall management of resources corresponding to each service node. The resources corresponding to the service nodes include at least one of: stored and/or used models, data resources, computing resources, or communication resources. In some embodiments, the resources included in the first domain are open to be used by the service nodes within the first domain and/or specific domains. The first domain can provide optimal strategies for accurate model matching, network resource scheduling, data sharing, etc.

In one example, the first domain can be divided according to service types, and based on this, it can be further subdivided according to dimensions such as locations, users, third-party customizations, etc. New service nodes are added to corresponding first domains according to the division principle. For example, mobility management at a specific location can be divided into a first domain, which is responsible for performing best mobility management optimization for all terminal devices at the location. For example, as shown in FIG. 4, four first domains 410 are divided according to certain division principles, and different service nodes 420 can have a part of resources to support one first domain 410.

A specific example will be given below to introduce the role of the first domain.

For example, assuming that there is a need to use AI technology to perform autonomous driving at Location 1, a first domain can be established for Location 1. This first domain is only used to perform an autonomous driving service at Location 1. For this purpose, the first domain needs to train a best AI model for use by a terminal, and it also needs to provide corresponding AI services locally. In order to achieve the training of the AI model, the first domain will continuously optimize its own model by collecting autonomous driving interruption information at Location 1, including the current usage of the AI model, terminal feedback, model training (such as federated learning), etc., so as to continuously improve the experience of autonomous driving. Over time, the first domain has become most familiar with the autonomous driving service at Location 1, including forming a mature AI model that can configure optimal work tasks (such as computational tasks for all or part of the model part of the AI model) according to characteristics and real-time conditions of different terminal devices entering Location 1, and configure required communication resources and computing resources for different terminal devices.

When a terminal device needs to perform autonomous driving at Location 1, it needs to join the first domain for the location, such that the first domain can issue the most suitable AI model and work tasks to the user based on the characteristics and objective conditions of the user, and allocate the most appropriate service node to it and establish the required communication connections. At the same time, the terminal device can also participate in model training based on federated learning with the organization of the first domain.

It can be seen from the above embodiments that the first domain can be used to perform a specific service under a specific condition. On one hand, terminal devices often have a variety of different AI service requirements. On the other hand, the first domain is the concept of network-side resource planning, and terminal devices cannot directly understand the first domain. Therefore, the present disclosure achieves the goal of different terminal devices joining the first domain on demand using the following embodiments. These embodiments are introduced and described below.

It should be noted that the "first domain" described in the embodiments of the present disclosure can also be replaced by other names, such as "AI domain", "resource domain", "service domain", etc. For convenience of description, in the embodiments of the present disclosure, at least one service node for overall managing to performing a specific AI service is collectively referred to as a "first domain". It should be understood that the present disclosure is not limited to this.

FIG. 5 shows a schematic diagram showing a communication system according to an embodiment of the present disclosure. The communication system may include: a terminal device 510 and a network device 520.

The number of terminal devices 510 is usually larger than one, and one or more terminal devices 510 may be distributed in a cell managed by each network device 520. The terminal device 510 may include various handheld devices with wireless communication functions, vehicle-mounted devices, wearable devices, computing devices or other processing devices connected to wireless modems, as well as various forms of User Equipment (UE), Mobile Stations (MSs) and so on. For convenience of description, in the embodiments of the present disclosure, the above devices are collectively referred to as terminal devices.

The network device 520 is a device deployed in an access network to provide wireless communication functions for the terminal devices 510. The network device 520 may include various forms of macro base stations, micro base stations, relay stations, access points, etc. In systems using different wireless access technologies, the names of devices with network device functions may be different. For example, in the 5^{th} Generation (5G) mobile communication technology or NR system, they are referred to as gNodeBs or gNBs. As communications technology evolves, the name "network device" may change. For convenience of description, in the embodiment of the present disclosure, the above devices that provide wireless communication functions for the terminal devices 510 are collectively referred to as network devices. In some embodiments, the network device 520 and the terminal devices 510 communicate with each other using some air interface technology, such as a Uu interface.

The "5G NR system" in the embodiment of the present disclosure may also be called a 5G system or an NR system, but those skilled in the art can understand its meaning. It should be understood that the technical solutions of the embodiments of the present disclosure can be applied to various communication systems, such as: 6G system, Long Term Evolution (LTE) system, LTE Frequency Division Duplex (FDD) system, LTE Time Division Duplex (TDD) system, Advanced Long Term Evolution (LTE-A) system, NR system, evolved NR system, LTE-based access to Unlicensed spectrum (LTE-U) system, New Radio-Unlicensed (NR-U) system, Wireless Local Area Networks (WLAN), Wireless Fidelity (WiFi), next-generation communication system or other communication systems, etc.

FIG. 6 is a flowchart illustrating a configuration method according to an embodiment of the present disclosure. This method can be applied to the above communication system shown in FIG. 5. The method may include at least some of the following operations.

At Operation 610, a network device transmits configuration information to a terminal device. The configuration information includes at least one of: an identifier of a first Artificial Intelligence (AI) service or first domain information corresponding to the first AI service. Here, the first domain information corresponding to the first AI service refers to information related to a first domain for executing the first AI service.

The configuration information is used to configure the terminal device with information related to the first domain for executing the first AI service. In some embodiments, the first AI service may include at least one of: an autonomous driving service, an Augmented Reality (AR) service, or a Virtual Reality (VR) service. In some embodiments, the first AI service may be a coarse-grained service or a service specific to a third party, and the embodiment of the present disclosure is not limited to this. In some embodiments, the first domain for executing the first AI service may include at least one of: at least one service node for executing the first AI service or a resource corresponding to each service node. In some embodiments, the resource corresponding to each service node may include at least one of: a stored and/or used model, a data resource, a computing resource, or a communication resource. For further introduction to the first domain, reference can be made to the above embodiment, and details thereof will be omitted here.

In an embodiment of the present disclosure, the configuration information may include at least one of: an identifier of the first AI service or first domain information corresponding to the first AI service. The first domain information corresponding to the first AI service refers to information related to the first domain for executing the first AI service. In some embodiments, the first domain information may include at least one of: an identifier of the first domain, a condition for joining the first domain, or an identity token. In some embodiments, the configuration information may further include a temporary device identifier used for the terminal device to join the first domain for executing the first AI service.

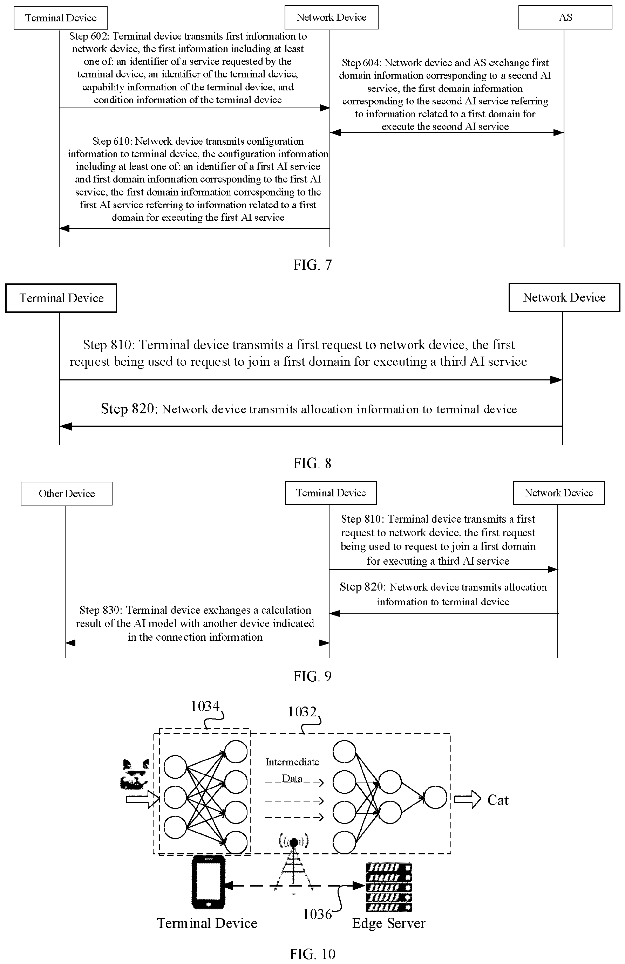

In one example, as shown in FIG. 7, before the above operation 610, at least some of the following operations may also be included.

At Operation 602, the terminal device transmits first information to the network device. The first information includes at least one of: an identifier of a service requested by the terminal device, an identifier of the terminal device, capability information of the terminal device, or condition information of the terminal device.

The terminal device may transmit the first information to the network device, thereby providing a reference for the network device to configure the information related to the first domain for the terminal device. In an embodiment of the present disclosure, the first information may include at least one of: an identifier of the service requested by the terminal device, an identifier of the terminal device, capability information of the terminal device, or condition information of the terminal device. In some embodiments, the service requested by the terminal device may include at least one of: an autonomous driving service, an AR service, or a VR service. In some embodiments, the identifier of the terminal device may include at least one of: an International Mobile Subscriber Identity (IMSI), a Globally Unique Temporary User Equipment Identity (GUTI), a Subscription Permanent Identifier (SUPI), or a Uniform Resource Identifier (URI) type of identifier. In some embodiments, the capability information of the terminal device may include at least one of: a computing capability of the terminal device, a power capacity of the terminal device, a storage capability of the terminal device, or a data type of the terminal device. In some embodiments, the condition information of the terminal device may include at least one of: a location of the terminal device, a speed of the terminal device, time of the terminal device, or a movement trajectory of the terminal device.

In one example, the first information may include an identifier of the service requested by the terminal device. That is, the terminal device indicates the service requested by the terminal device to the network device via the first information, and then the network device can configure the terminal device with the information related to the first domain based on the service requested by the terminal device. In some embodiments, the service requested by the terminal device may include the first AI service. That is, the service corresponding to the information related to the first domain configured by the network device for the terminal device may be one or more services among services requested by the terminal device. Of course, the first AI service may also be a service other than the service requested by the terminal device. Alternatively, a part of the first AI service may belong to the service requested by the terminal device, and another part of the first AI service may be service other than the service requested by the terminal device. It should be understood that these should all fall within the protection scope of the present disclosure.

The embodiment of the present disclosure is not limited to any specific timing of configuring the information related to the first domain. In some embodiments, the terminal device can obtain the information related to the first domain during a registration process, or the terminal device can obtain the information related to the first domain by scanning a broadcast message, or the terminal device can obtain the information related to the first domain during a random access procedure. In some embodiments, when the terminal device obtains the information related to the first domain during the registration process, the first information may be carried in a Registration Request transmitted by the terminal device to the network device. Based on this, the configuration information may be carried in a Registration Response (Registration Accept) transmitted by the network device to the terminal device.

In one example, as shown in FIG. 7, before the above operation 610, at least some of the following operations may also be included.

At Operation 604, the network device and an application server exchange first domain information corresponding to a second AI service. The first domain information corresponding to the second AI service refers to information related to a first domain for execute the second AI service.

If necessary, the network device and the Application Server (AS) can exchange the first domain information corresponding to the second AI service, including the application server transmitting the first domain information corresponding to the second AI service to the network device. The embodiment of the present disclosure is not limited to any condition for the exchange between the network device and the application server. In some embodiments, the network device may exchange the first domain information corresponding to the second AI service with the application server when it does not store the first domain information corresponding to the second Al service, or when the first domain information corresponding to the second AI service stored in the network device is updated.

The embodiment of the present disclosure is not limited to any relationship between the second AI service and the first AI service. In one example, the second AI service may include the first AI service, that is, the network device configures the first domain information corresponding to some or all of the services exchanged with the application server for the terminal device. In another example, the first AI service may include the second AI service, that is, the network device jointly configures the first domain information corresponding to all services exchanged with the application server and the first domain information corresponding to other services for the terminal device. For example, in addition to configuring the first domain information corresponding to the second AI service for the terminal device, the network device may also configure the first domain information corresponding to other services stored by itself for the terminal device.

The embodiment of the present disclosure is not limited to any relationship between the second AI service and the service requested by the terminal device. In one example, the first information may include an identifier of the service requested by the terminal device, that is, the terminal device notifies the network device of the service requested by the terminal device. Based on this, the service requested by the terminal device may include the second AI service, that is, the service corresponding to the information related to the first domain exchanged between the network device and the application server is one or more services among services requested by the terminal device. Of course, the second AI service may not be a service requested by the terminal device, or a part of the second AI service may belong to a service requested by the terminal device, and another part of the second AI service may not belong to a service requested by the terminal device. It should be understood that these should all fall within the protection scope of the present disclosure.

In summary, with the technical solutions according to the embodiments of the present disclosure, the network device configures information related to a first domain for a specific service for the terminal device, such that the terminal device can subsequently initiate a process for joining the first domain for the specific service, which provides basis for the terminal device to participate in data analysis corresponding to the specific service. Moreover, in the technical solutions according to the embodiments of the present disclosure, the terminal device can obtain the information related to the first domain for a specific service during the process of registering with the network device, which provides compatibility with the existing exchange process between the terminal device and the network device, without the need to introduce a separate exchange process for the information related to the first domain, thereby avoiding excessive signaling exchange between the terminal device and the network device and saving signaling overhead.

In the above embodiment, the process of the network device configuring the information related to the first domain for the terminal device has been introduced. Next, the process of the terminal device joining the first domain using the information related to the first domain will be introduced and explained.

FIG. 8 is a flowchart illustrating an allocation method according to an embodiment of the present disclosure. The method can be applied in the above communication system shown in FIG. 5. The method may include at least some of the following operations.

At Operation 810, the terminal device transmits a first request to a network device, the first request being used to request to join a first domain for executing a third Artificial Intelligence (AI) service.

When the terminal device needs to participate in the third Al service, the terminal device may transmit a first request to the network device, the first request being used to request to join the first domain for executing the third AI service. In some embodiments, the first AI service may include at least one of: an autonomous driving service, an AR service, or a VR service. In some embodiments, the first AI service may be a coarse-grained service or a service specific to a third party, and the embodiment of the present disclosure is not limited to this. In some embodiments, the first domain for executing the first AI service may include at least one of: at least one service node for executing the first AI service or a resource corresponding to each service node. In some embodiments, the resource corresponding to each service node may include at least one of: a stored and/or used model, a data resource, a computing resource, or a communication resource. For other introduction to the first domain, reference can be made to the above embodiment, and details thereof will be omitted here. In some embodiments, the information related to the first domain of the third AI service may be configured by the network device for the terminal device in the way shown in the embodiments of FIGS. 6 to 7.

The embodiment of the present disclosure is not limited to any content of the first request. In one example, the first request may include at least one of: an identifier of the terminal device, a temporary device identifier, an identifier of the third AI service, capability information of the terminal device, condition information of the terminal device, an identifier of the first domain for executing the third AI service, or an identity token. The temporary device identifier may be configured by the network device for the terminal device in Operation 610 in the above embodiment. In some embodiments, the identifier of the terminal device may include at least one of: an IMSI, a GUTI, an SUPI, or a URI type of identifier. In some embodiments, the capability information of the terminal device may include at least one of: a computing capability of the terminal device, a power capacity of the terminal device, a storage capability of the terminal device, or a data type of the terminal device. In some embodiments, the condition information of the terminal device may include at least one of: a location of the terminal device, a speed of the terminal device, time of the terminal device, or a movement trajectory of the terminal device.

At Operation 820, the network device transmits allocation information to the terminal device.

The network device allocates a computing task of the third AI service to the terminal device based on the request of the terminal device. That is, the allocation information transmitted by the network device to the terminal device may be used to allocate resources required for the terminal device to execute the third AI service. The embodiment of the present disclosure is not limited to the content of the allocation information. In one example, the allocation information may include at least one of: AI model information indicating information related to an AI model used by the terminal device; an operation parameter indicating a model part that the terminal device needs to calculate for the AI model; or connection information indicating another device that the terminal device needs to communicate with when executing the third AI service.

In some embodiments, the allocation information includes connection information. As shown in FIG. 9, after the above Operation 820, an Operation 830 may also be included, in which the terminal device exchanges a calculation result of the Al model with another device indicated in the connection information.

For example, as shown in FIG. 10, the allocation information transmitted by the network device to the terminal device may include AI model information 1032, an operating parameter 1034, and connection information 1036. The connection information 1036 indicates an edge server the terminal device needs to communicate with when performing the third AI service. For example, the terminal device calculates the first three-layer model part indicated in the AI model information 1032, obtains an intermediate result, and then sends the intermediate result to the edge server. The edge server calculates the last three-layer model part, obtains a calculation result, and then sends the calculation result to the terminal device, such that the terminal device can use the calculation result.

In order to improve data security in the AI domain, in one example, the first request transmitted by the terminal device to the network device includes an identity token. After the above operation 810, the method may further include: the network device authenticating the terminal device based on the identity token. For example, another identity token is stored on the network device side. When the two identity tokens are consistent, the terminal device is authenticated. In some embodiments, the network device may transmit the allocation information to the terminal device after the terminal device is authenticated. In one example, the above method may further include: the network device determining whether to accept the terminal device to join the first domain for executing the third AI service based on the first request, and transmitting the allocation information to the terminal device when the terminal device is accepted to join. For example, when the network device locally stores the allocation information corresponding to the third AI service, or when the terminal device satisfies the division principle of the first domain, the network device allows the terminal device to join the first domain for executing the third AI service. The embodiment of the present disclosure is not limited to this.

To summarize, with the technical solutions according to the embodiments of the present disclosure, when the terminal device requests the network device for joining the first domain for executing a specific service, the network device allocates resources required for participating in the computation of the specific service to the terminal device, such that the terminal device can perform the specific service. Moreover, in the technical solutions according to the embodiments of the present disclosure, the network device first authenticates the terminal device before allocating resources to the terminal device. When the terminal device is authenticated, the network device allocates resources to the terminal device, which improves the security of the first domain.

It should be noted that the configuration methods provided in the above embodiments of FIGS. 6 and 7 can be implemented in combination with the allocation methods provided in the above embodiments of FIGS. 8 to 10 to enable different terminal devices to join the first domain on demand. For example, the allocation methods provided in the above embodiments of FIGS. 8 to 10 may be implemented after the configuration methods provided in the above embodiments of FIGS. 6 to 7.

It can be appreciated that the embodiments of the present disclosure only introduce the configuration methods and the allocation methods from the perspective of interaction between the terminal device and the network device. In the configuration methods provided in the embodiments of FIGS. 6 and 7, the operations performed by the terminal device can be independently implemented as a configuration method on the terminal device side. In the configuration methods provided in the embodiments of FIGS. 6 and 7, the operations performed by the network device can be independently implemented as a configuration method on the network device side. In the embodiments of FIGS. 8 to 10, the operations performed by the terminal device can be independently implemented as an allocation method on the terminal device side. In the embodiments of FIGS. 8 to 10, the operations performed by the network device can be independently implemented as an allocation method on the network device side.

The apparatus embodiments of the present disclosure will be described. The apparatuses can be configured to implement the method embodiments of the present disclosure. For details not disclosed in the apparatus embodiments of the present disclosure, reference can be made to the method embodiments of the present disclosure.

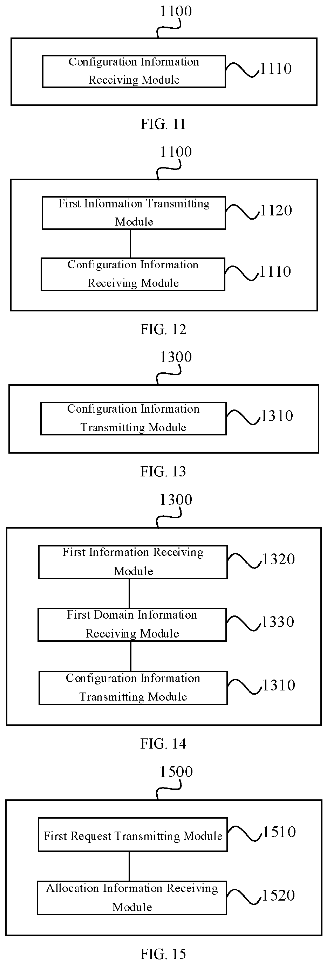

Reference is now made to FIG. 11, which shows a block diagram of a configuration apparatus according to an embodiment of the present disclosure. The apparatus has the function of implementing the above method example in the terminal device, and the function may be implemented by hardware, or by hardware executing corresponding software. The apparatus can be the terminal device described above, or can be provided in the terminal device. As shown in FIG. 11, the apparatus 1100 may include a configuration information receiving module 1110.

The configuration information receiving module 1110 is configured to receive configuration information from a network device. The configuration information includes at least one of: an identifier of a first Artificial Intelligence (AI) service or first domain information corresponding to the first AI service. Here, the first domain information corresponding to the first AI service refers to information related to a first domain for executing the first AI service.

In one example, the first domain for executing the first AI service may include at least one of: at least one service node for executing the first AI service or a resource corresponding to each service node.

In one example, the resource corresponding to each service node may include at least one of: a stored and/or used model, a data resource, a computing resource, or a communication resource.

In one example, the first domain information may include at least one of: an identifier of the first domain, a condition for joining the first domain, or an identity token.

In one example, the configuration information may further include a temporary device identifier used for the terminal device to join the first domain for executing the first AI service.

In one example, as shown in FIG. 12, the apparatus 1100 may further include: a first information transmitting module 1120 configured to transmit first information to the network device, the first information including at least one of: an identifier of a service requested by the terminal device, an identifier of the terminal device, capability information of the terminal device, or condition information of the terminal device.

In one example, the service requested by the terminal device may include at least one of: an autonomous driving service, an Augmented Reality (AR) service, or a Virtual Reality (VR) service.

In one example, the identifier of the terminal device may include at least one of: an International Mobile Subscriber Identity (IMSI), a Globally Unique Temporary User Equipment Identity (GUTI), a Subscription Permanent Identifier (SUPI), or a Uniform Resource Identifier (URI) type of identifier.

In one example, the capability information of the terminal device may include at least one of: a computing capability of the terminal device, a power capacity of the terminal device, a storage capability of the terminal device, or a data type of the terminal device.

In one example, the condition information of the terminal device may include at least one of: a location of the terminal device, a speed of the terminal device, time of the terminal device, or a movement trajectory of the terminal device.

In one example, the service requested by the terminal device may include the first AI service.

In one example, the first information may be carried in a registration request transmitted by the terminal device to the network device; and the configuration information may be carried in a registration response transmitted by the network device to the terminal device.

Reference is now made to FIG. 13, which shows a block diagram of a configuration apparatus according to an embodiment of the present disclosure. The apparatus has the function of implementing the method example in the network device, and the function may be implemented by hardware, or by hardware executing corresponding software. The apparatus may be the network device described above, or may be provided in the network device. As shown in FIG. 13, the apparatus 1300 may include a configuration information transmitting module 1310.

The configuration information transmitting module 1310 is configured to transmit configuration information to a terminal device. The configuration information includes at least one of: an identifier of a first Artificial Intelligence (AI) service or first domain information corresponding to the first AI service. Here, the first domain information corresponding to the first AI service refers to information related to a first domain for executing the first AI service.

In one example, the first domain for executing the first AI service may include at least one of: at least one service node for executing the first AI service or a resource corresponding to each service node.

In one example, the resource corresponding to each service node may include at least one of: a stored and/or used model, a data resource, a computing resource, or a communication resource.

In one example, the first domain information may include at least one of: an identifier of the first domain, a condition for joining the first domain, or an identity token.

In one example, the configuration information may further include a temporary device identifier used for the terminal device to join the first domain for executing the first AI service.

In one example, as shown in FIG. 14, the apparatus 1300 may further include: a first information receiving module 1320 configured to receive first information from the terminal device, the first information including at least one of: an identifier of a service requested by the terminal device, an identifier of the terminal device, capability information of the terminal device, or condition information of the terminal device.

In one example, the service requested by the terminal device may include at least one of: an autonomous driving service, an Augmented Reality (AR) service, or a Virtual Reality (VR) service.

In one example, the identifier of the terminal device may include at least one of: an International Mobile Subscriber Identity (IMSI), a Globally Unique Temporary User Equipment Identity (GUTI), a Subscription Permanent Identifier (SUPI), or a Uniform Resource Identifier (URI) type of identifier.

In one example, the capability information of the terminal device may include at least one of: a computing capability of the terminal device, a power capacity of the terminal device, a storage capability of the terminal device, or a data type of the terminal device.

In one example, the condition information of the terminal device may include at least one of: a location of the terminal device, a speed of the terminal device, time of the terminal device, or a movement trajectory of the terminal device.

In one example, the service requested by the terminal device may include the first AI service.

In one example, the first information may be carried in a registration request transmitted by the terminal device to the network device; and the configuration information may be carried in a registration response transmitted by the network device to the terminal device.

In one example, as shown in FIG. 14, the apparatus 1300 may further include: a first domain information receiving module 1330 configured to receive first domain information corresponding to a second AI service from an application server, the first domain information corresponding to the second AI service referring to information related to a first domain for executing the second AI service.

In one example, the service requested by the terminal device may include the second AI service.

In one example, the second AI service may include the first AI service; or the first AI service may include the second AI service.

Reference is now made to FIG. 15, which shows a block diagram of an allocation apparatus according to an embodiment of the present disclosure. The apparatus has the function of implementing the above method example in the terminal device, and the function may be implemented by hardware, or by hardware executing corresponding software. The apparatus can be the terminal device described above, or can be provided in the terminal device. As shown in FIG. 15, the apparatus 1500 may include: a first request transmitting module 1510 and an allocation information receiving module 1520.

The first request transmitting module 1510 is configured to transmit a first request to a network device, the first request being used to request to join a first domain for executing a third Artificial Intelligence (AI) service.

The allocation information receiving module 1520 is configured to receive allocation information from the network device.

In one example, the first domain for executing the third AI service may include at least one of: at least one service node for executing the third AI service or a resource corresponding to each service node.

In one example, the resource corresponding to each service node may include at least one of: a stored and/or used model, a data resource, a computing resource, or a communication resource.

In one example, the first request may include at least one of: an identifier of the terminal device, a temporary device identifier, an identifier of the third AI service, capability information of the terminal device, condition information of the terminal device, an identifier of the first domain for executing the third AI service, or an identity token.

In one example, the allocation information may include at least one of: AI model information indicating information related to an AI model used by the terminal device; an operation parameter indicating a model part that the terminal device needs to calculate for the AI model; or connection information indicating another device that the terminal device needs to communicate with when executing the third AI service.

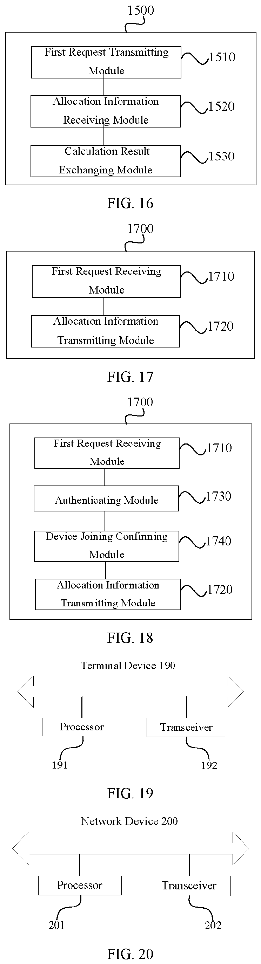

In one example, the allocation information may include connection information. As shown in FIG. 16, the apparatus 1500 may further include: a calculation result exchanging module 1530 configured to exchange a calculation result of the AI model with another device indicated in the connection information.

Reference is now made to FIG. 17, which shows a block diagram of an allocation apparatus according to an embodiment of the present disclosure. The apparatus has the function of implementing the method example in the network device, and the function may be implemented by hardware, or by hardware executing corresponding software. The apparatus may be the terminal device described above, or may be provided in the terminal device. As shown in FIG. 17, the apparatus 1700 may include a first request receiving module 1710 and an allocation information transmitting module 1720.

The first request receiving module 1710 is configured to receive a first request from a terminal device, the first request being used to request to join a first domain for executing a third Artificial Intelligence (AI) service.

The allocation information transmitting module 1720 is configured to transmit allocation information to the terminal device.

In one example, the first domain for executing the third AI service may include at least one of: at least one service node for executing the third AI service or a resource corresponding to each service node.

In one example, the resource corresponding to each service node may include at least one of: a stored and/or used model, a data resource, a computing resource, or a communication resource.

In one example, the first request may include at least one of: an identifier of the terminal device, a temporary device identifier, an identifier of the third AI service, capability information of the terminal device, condition information of the terminal device, an identifier of the first domain for executing the third AI service, or an identity token.

In one example, the first request includes an identity token. As shown in FIG. 18, the apparatus 1700 may further include: an authenticating module 1730 configured to authenticate the terminal device based on the identity token.

In one example, the allocation information may include at least one of: AI model information indicating information related to an AI model used by the terminal device; an operation parameter indicating a model part that the terminal device needs to calculate for the AI model; or connection information indicating another device that the terminal device needs to communicate with when executing the third AI service.

In one example, as shown in FIG. 18, the apparatus 1700 may further include: a device joining confirming module 1740 configured to determine whether to accept the terminal device to join the first domain for executing the third AI service based on the first request. The allocation information transmitting module 1720 may be configured to transmit the allocation information to the terminal device when the terminal device is accepted to join.

It should be noted that, when the apparatus provided in any of the above embodiments achieves its functions, the division of the above functional modules is provided for the purpose of illustration only. In practice, the above functions can be allocated to different functional modules depending one actual requirements. That is, the content/structure of the apparatus can be divided into different functional modules to complete all or part of the functions described above.

Regarding the apparatus in any of the above embodiment, the specific operation of each module has been described in detail in the corresponding method embodiments, and description thereof will be omitted here.

Reference is now made to FIG. 19, which is a schematic diagram showing a structure of a terminal device 190 according to an embodiment of the present disclosure. For example, the terminal device can be configured to implement the above configuration method in the terminal device or the allocation method in the terminal device. In particular, the terminal device 190 may include: a processor 191 and a transceiver 192 connected to the processor 191.

Here, the processor 191 includes one or more processing cores, and the processor 191 implements various functional applications and information processing by executing software programs and modules.

The transceiver 192 includes a receiver and a transmitter. In some embodiments, the transceiver 192 may be a communication chip.

In an example, the terminal device 190 further includes a memory and a bus. The memory is connected to the processor through the bus.

The memory can store a computer program, and the processor can be configured to execute the computer program, so as to implement various operations performed by the terminal device in the above method embodiments.

In addition, the memory can be implemented by any type of volatile or non-volatile storage device or any combination thereof, the volatile or non-volatile storage device including, but not limited to: Random-Access Memory (RAM), Read-Only Memory (ROM), Erasable Programmable Read-Only Memory (EPROM), Electrically Erasable Programmable Read-Only Memory (EEPROM), flash memory or other solid state storage technology, Compact Disc Read-Only Memory (CD-ROM), Digital Video Disc (DVD) or other optical storage, cassette, magnetic tape, magnetic disk storage or other magnetic storage device.

In a possible implementation, the transceiver 192 is configured to: receive configuration information from a network device. The configuration information includes at least one of: an identifier of a first Artificial Intelligence (AI) service or first domain information corresponding to the first AI service. The first domain information corresponding to the first AI service refers to information related to a first domain for executing the first AI service.

In one example, the first domain for executing the first AI service may include at least one of: at least one service node for executing the first AI service or a resource corresponding to each service node.

In one example, the resource corresponding to each service node may include at least one of: a stored and/or used model, a data resource, a computing resource, or a communication resource.

In one example, the first domain information may include at least one of: an identifier of the first domain, a condition for joining the first domain, or an identity token.

In one example, the configuration information may further include a temporary device identifier used for the terminal device to join the first domain for executing the first AI service.

In one example, the transceiver 192 may be further configured to: transmit first information to the network device, the first information including at least one of: an identifier of a service requested by the terminal device, an identifier of the terminal device, capability information of the terminal device, or condition information of the terminal device.

In one example, the service requested by the terminal device may include at least one of: an autonomous driving service, an Augmented Reality (AR) service, or a Virtual Reality (VR) service.

In one example, the identifier of the terminal device may include at least one of: an International Mobile Subscriber Identity (IMSI), a Globally Unique Temporary User Equipment Identity (GUTI), a Subscription Permanent Identifier (SUPI), or a Uniform Resource Identifier (URI) type of identifier.

In one example, the capability information of the terminal device may include at least one of: a computing capability of the terminal device, a power capacity of the terminal device, a storage capability of the terminal device, or a data type of the terminal device.

In one example, the condition information of the terminal device may include at least one of: a location of the terminal device, a speed of the terminal device, time of the terminal device, or a movement trajectory of the terminal device.

In one example, the service requested by the terminal device may include the first AI service.

In one example, the first information may be carried in a registration request transmitted by the terminal device to the network device; and the configuration information may be carried in a registration response transmitted by the network device to the terminal device.

In another possible implementation, the transceiver 192 may be configured to transmit a first request to a network device, the first request being used to request to join a first domain for executing a third Artificial Intelligence (AI) service, and receive allocation information from the network device.

In one example, the first domain for executing the third AI service may include at least one of: at least one service node for executing the third AI service or a resource corresponding to each service node.

In one example, the resource corresponding to each service node may include at least one of: a stored and/or used model, a data resource, a computing resource, or a communication resource.

In one example, the first request may include at least one of: an identifier of the terminal device, a temporary device identifier, an identifier of the third AI service, capability information of the terminal device, condition information of the terminal device, an identifier of the first domain for executing the third AI service, or an identity token.

In one example, the allocation information may include at least one of: AI model information indicating information related to an AI model used by the terminal device; an operation parameter indicating a model part that the terminal device needs to calculate for the AI model; or connection information indicating another device that the terminal device needs to communicate with when executing the third AI service.

In one example, the allocation information may include connection information. The transceiver 192 may be configured to exchange a calculation result of the AI model with another device indicated in the connection information.

FIG. 20 is a schematic diagram showing a structure of a network device 200 according to an embodiment of the present disclosure. For example, the network device can be configured to implement the above configuration method in the network device or the allocation method in the network device. In particular, the network device 200 may include: a processor 201 and a transceiver 202 connected to the processor 201.

Here, the processor 201 includes one or more processing cores, and the processor 201 implements various functional applications and information processing by executing software programs and modules.

The transceiver 202 includes a receiver and a transmitter. In some embodiments, the transceiver 202 may be a communication chip.

In an example, the network device 200 further includes a memory and a bus. The memory is connected to the processor through the bus.

The memory can store a computer program, and the processor can be configured to execute the computer program, so as to implement various operations performed by the network device in the above method embodiments.

In addition, the memory can be achieved by any type of volatile or non-volatile storage device or any combination thereof, and the volatile or non-volatile storage device includes, but not limited to: Random-Access Memory (RAM), Read-Only Memory (ROM), Erasable Programmable Read-Only Memory (EPROM), Electrically Erasable Programmable Read-Only Memory (EEPROM), flash memory or another solid-state storage technology, Compact Disc Read-Only Memory (CD-ROM), Digital Video Disc (DVD) or another optical storage, tape cartridge, tape, disks storage or another magnetic storage device.

In a possible implementation, the transceiver 202 is used to transmit configuration information to a terminal device. The configuration information includes at least one of: an identifier of a first Artificial Intelligence (AI) service or first domain information corresponding to the first AI service. Here, the first domain information corresponding to the first AI service refers to information related to a first domain for executing the first AI service.

In one example, the first domain for executing the first AI service may include at least one of: at least one service node for executing the first AI service or a resource corresponding to each service node.

In one example, the resource corresponding to each service node may include at least one of: a stored and/or used model, a data resource, a computing resource, or a communication resource.

In one example, the first domain information may include at least one of: an identifier of the first domain, a condition for joining the first domain, or an identity token.

In one example, the configuration information may further include a temporary device identifier used for the terminal device to join the first domain for executing the first AI service.

In one example, the transceiver 202 may be further configured to receive first information from the terminal device, the first information including at least one of: an identifier of a service requested by the terminal device, an identifier of the terminal device, capability information of the terminal device, or condition information of the terminal device.

In one example, the service requested by the terminal device may include at least one of: an autonomous driving service, an Augmented Reality (AR) service, or a Virtual Reality (VR) service.

In one example, the identifier of the terminal device may include at least one of: an International Mobile Subscriber Identity (IMSI), a Globally Unique Temporary User Equipment Identity (GUTI), a Subscription Permanent Identifier (SUPI), or a Uniform Resource Identifier (URI) type of identifier.

In one example, the capability information of the terminal device may include at least one of: a computing capability of the terminal device, a power capacity of the terminal device, a storage capability of the terminal device, or a data type of the terminal device.

In one example, the condition information of the terminal device may include at least one of: a location of the terminal device, a speed of the terminal device, time of the terminal device, or a movement trajectory of the terminal device.

In one example, the service requested by the terminal device may include the first AI service.

In one example, the first information may be carried in a registration request transmitted by the terminal device to the network device; and the configuration information may be carried in a registration response transmitted by the network device to the terminal device.

In one example, the transceiver 202 may be further configured to: receive first domain information corresponding to a second AI service from an application server, the first domain information corresponding to the second AI service referring to information related to a first domain for executing the second AI service.

In one example, the service requested by the terminal device may include the second AI service.

In one example, the second AI service may include the first AI service; or the first AI service may include the second AI service.

In another possible implementation, the transceiver 202 is configured to receive a first request from a terminal device, the first request being used to request to join a first domain for executing a third Artificial Intelligence (AI) service; and transmit allocation information to the terminal device.

In one example, the first domain for executing the third AI service may include at least one of: at least one service node for executing the third AI service or a resource corresponding to each service node.

In one example, the resource corresponding to each service node may include at least one of: a stored and/or used model, a data resource, a computing resource, or a communication resource.

In one example, the first request may include at least one of: an identifier of the terminal device, a temporary device identifier, an identifier of the third AI service, capability information of the terminal device, condition information of the terminal device, an identifier of the first domain for executing the third AI service, or an identity token.

In one example, the first request includes an identity token. The processor 201 may be configured to authenticate the terminal device based on the identity token.

In one example, the allocation information may include at least one of: AI model information indicating information related to an AI model used by the terminal device; an operation parameter indicating a model part that the terminal device needs to calculate for the AI model; or connection information indicating another device that the terminal device needs to communicate with when executing the third AI service.

In one example, the processor 201 may be configured to determine whether to accept the terminal device to join the first domain for executing the third AI service based on the first request, and the transceiver 202 may be configured to transmit the allocation information to the terminal device when the terminal device is accepted to join.

According to an embodiment of the present disclosure, a computer-readable storage medium is provided. The storage medium has a computer program stored therein. The computer program is configured to be executed by a processor of a terminal device to perform the above configuration method in the terminal device.

According to an embodiment of the present disclosure, a computer-readable storage medium is provided. The storage medium has a computer program stored therein. The computer program is configured to be executed by a processor of a network device to perform the above configuration method in the network device.

According to an embodiment of the present disclosure, a computer-readable storage medium is provided. The storage medium has a computer program stored therein. The computer program is configured to be executed by a processor of a terminal device to perform the above allocation method in the terminal device.

According to an embodiment of the present disclosure, a computer-readable storage medium is provided. The storage medium has a computer program stored therein. The computer program is configured to be executed by a processor of a network device to perform the above allocation method in the network device.

According to an embodiment of the present disclosure, a chip is provided. The chip includes a programmable logic circuit and/or program instructions. When the chip runs on a terminal device, it is configured to perform the above configuration method in the terminal device.

According to an embodiment of the present disclosure, a chip is provided. The chip includes a programmable logic circuit and/or program instructions. When the chip runs on a network device, it is configured to perform the above configuration method in the network device.

According to an embodiment of the present disclosure, a chip is provided. The chip includes a programmable logic circuit and/or program instructions. When the chip runs on a terminal device, it is configured to perform the above allocation method in the terminal device.

According to an embodiment of the present disclosure, a chip is provided. The chip includes a programmable logic circuit and/or program instructions. When the chip runs on a network device, it is configured to perform the above allocation method in the network device.

According to an embodiment of the present disclosure, a computer program product is provided. The computer program is configured to, when running on a terminal device, perform the above configuration method in the terminal device.

According to an embodiment of the present disclosure, a computer program product is provided. The computer program is configured to, when running on a network device, perform the above configuration method in the network device.

According to an embodiment of the present disclosure, a computer program product is provided. The computer program is configured to, when running on a terminal device, perform the above allocation method in the terminal device.

According to an embodiment of the present disclosure, a computer program product is provided. The computer program is configured to, when running on a network device, perform the above allocation method in the network device.

It can be appreciated by those skilled in the art that, in one or more of the above examples, the functions described in the embodiments of the present disclosure may be implemented by hardware, software, firmware, or any combination thereof. When implemented by software, the functions may be stored in a computer-readable medium or transmitted as one or more instructions or codes on a computer-readable medium. The computer-readable medium includes a computer storage medium and a communication medium. The communication medium includes any medium that facilitates transfer of a computer program from one place to another. The storage medium can be any available medium that can be accessed by a general purpose or special purpose computer.

While the preferred embodiments of the present disclosure have been described above, they are not intended to limit the present disclosure. Any modifications, equivalents, or improvements that can be made within the spirit and principle of the present disclosure are to be encompassed by the scope of the present disclosure.

## Claims

1. A configuration method, applied in a terminal device, the method comprising:
receiving configuration information from a network device, the configuration information comprising at least one of: an identifier of a first Artificial Intelligence (AI) service or first domain information corresponding to the first AI service,
wherein the first domain information corresponding to the first AI service is information related to a first domain for executing the first AI service.

2. The method according to claim 1, wherein the first domain for executing the first AI service comprises at least one of: at least one service node for executing the first AI service or a resource corresponding to each service node.

3. The method according to claim 2, wherein the resource corresponding to each service node comprises at least one of: a stored and/or used model, a data resource, a computing resource, or a communication resource.

4. The method according to any one of claims 1 to 3, wherein the first domain information comprises at least one of: an identifier of the first domain, a condition for joining the first domain, or an identity token.

5. The method according to any one of claims 1 to 4, wherein the configuration information further comprises a temporary device identifier used for the terminal device to join the first domain for executing the first AI service.

6. The method according to any one of claims 1 to 5, further comprising, prior to receiving the configuration information from the network device:
transmitting first information to the network device, the first information comprising at least one of: an identifier of a service requested by the terminal device, an identifier of the terminal device, capability information of the terminal device, or condition information of the terminal device.

7. The method according to claim 6, wherein the service requested by the terminal device comprises at least one of: an autonomous driving service, an Augmented Reality (AR) service, or a Virtual Reality (VR) service.

8. The method according to claim 6 or 7, wherein the identifier of the terminal device comprises at least one of: an International Mobile Subscriber Identity (IMSI), a Globally Unique Temporary User Equipment Identity (GUTI), a Subscription Permanent Identifier (SUPI), or a Uniform Resource Identifier (URI) type of identifier.

9. The method according to any one of claims 6 to 8, wherein the capability information of the terminal device comprises at least one of: a computing capability of the terminal device, a power capacity of the terminal device, a storage capability of the terminal device, or a data type of the terminal device.

10. The method according to any one of claims 6 to 9, wherein the condition information of the terminal device comprises at least one of: a location of the terminal device, a speed of the terminal device, time of the terminal device, or a movement trajectory of the terminal device.

11. The method according to any one of claims 6 to 10, wherein the service requested by the terminal device comprises the first AI service.

12. The method according to any one of claims 6 to 11, wherein
the first information is carried in a registration request transmitted by the terminal device to the network device; and
the configuration information is carried in a registration response transmitted by the network device to the terminal device.

13. A configuration method, applied in a network device, the method comprising:
transmitting configuration information to a terminal device, the configuration information comprising at least one of: an identifier of a first Artificial Intelligence (AI) service or first domain information corresponding to the first AI service,
wherein the first domain information corresponding to the first AI service is information related to a first domain for executing the first AI service.

14. The method according to claim 13, wherein the first domain for executing the first AI service comprises at least one of: at least one service node for executing the first AI service or a resource corresponding to each service node.

15. The method according to claim 14, wherein the resource corresponding to each service node comprises at least one of: a stored and/or used model, a data resource, a computing resource, or a communication resource.

16. The method according to any one of claims 13 to 15, wherein the first domain information comprises at least one of: an identifier of the first domain, a condition for joining the first domain, or an identity token.

17. The method according to any one of claims 13 to 16, wherein the configuration information further comprises a temporary device identifier used for the terminal device to join the first domain for executing the first AI service.

18. The method according to any one of claims 13 to 17, further comprising, prior to transmitting the configuration information to the terminal device:
receiving first information from the terminal device, the first information comprising at least one of: an identifier of a service requested by the terminal device, an identifier of the terminal device, capability information of the terminal device, or condition information of the terminal device.

19. The method according to claim 18, wherein the service requested by the terminal device comprises at least one of: an autonomous driving service, an Augmented Reality (AR) service, or a Virtual Reality (VR) service.

20. The method according to claim 18 or 19, wherein the identifier of the terminal device comprises at least one of: an International Mobile Subscriber Identity (IMSI), a Globally Unique Temporary User Equipment Identity (GUTI), a Subscription Permanent Identifier (SUPI), or a Uniform Resource Identifier (URI) type of identifier.

21. The method according to any one of claims 18 to 20, wherein the capability information of the terminal device comprises at least one of: a computing capability of the terminal device, a power capacity of the terminal device, a storage capability of the terminal device, or a data type of the terminal device.

22. The method according to any one of claims 18 to 21, wherein the condition information of the terminal device comprises at least one of: a location of the terminal device, a speed of the terminal device, time of the terminal device, or a movement trajectory of the terminal device.

23. The method according to any one of claims 18 to 22, wherein the service requested by the terminal device comprises the first AI service.

24. The method according to any one of claims 18 to 23, wherein
the first information is carried in a registration request transmitted by the terminal device to the network device; and
the configuration information is carried in a registration response transmitted by the network device to the terminal device.

25. The method according to any one of claims 18 to 24, further comprising, subsequent to receiving the first information from the terminal device:
receiving first domain information corresponding to a second AI service from an application server, the first domain information corresponding to the second AI service is information related to a first domain for executing the second AI service.

26. The method according to claim 25, wherein the service requested by the terminal device comprises the second AI service.

27. The method according to claim 25 or 26, wherein
the second AI service comprises the first AI service; or
the first AI service comprises the second AI service.

28. An allocation method, applied in a terminal device, the method comprising:
transmitting a first request to a network device, the first request being used to request to join a first domain for executing a third Artificial Intelligence (AI) service; and
receiving allocation information from the network device.

29. The method according to claim 28, wherein the first domain for executing the third AI service comprises at least one of: at least one service node for executing the third AI service or a resource corresponding to each service node.

30. The method according to claim 29, wherein the resource corresponding to each service node comprises at least one of: a stored and/or used model, a data resource, a computing resource, or a communication resource.

31. The method according to any one of claims 28 to 30, wherein the first request comprises at least one of: an identifier of the terminal device, a temporary device identifier, an identifier of the third AI service, capability information of the terminal device, condition information of the terminal device, an identifier of the first domain for executing the third AI service, or an identity token.

32. The method according to any one of claims 28 to 31, wherein the allocation information comprises at least one of:
AI model information indicating information related to an AI model used by the terminal device;
an operation parameter indicating a model part that the terminal device needs to calculate for the AI model; or
connection information indicating another device that the terminal device needs to communicate with when executing the third AI service.

33. The method according to any one of claims 28 to 32, wherein the allocation information comprises connection information, and wherein the method further comprises, subsequent to receiving the allocation information from the network device:
exchanging a calculation result of the AI model with another device indicated in the connection information.

34. An allocation method, applied in a network device, the method comprising:
receiving a first request from a terminal device, the first request being used to request to join a first domain for executing a third Artificial Intelligence (AI) service; and
transmitting allocation information to the terminal device.

35. The method according to claim 34, wherein the first domain for executing the third AI service comprises at least one of: at least one service node for executing the third AI service or a resource corresponding to each service node.

36. The method according to claim 35, wherein the resource corresponding to each service node comprises at least one of: a stored and/or used model, a data resource, a computing resource, or a communication resource.

37. The method according to any one of claims 34 to 36, wherein the first request comprises at least one of: an identifier of the terminal device, a temporary device identifier, an identifier of the third service, capability information of the terminal device, condition information of the terminal device, an identifier of the first domain for executing the third AI service, or an identity token.

38. The method according to any one of claims 34 to 37, wherein the first request comprises an identity token; and wherein the method further comprises, subsequent to receiving the joining request from the terminal device:
authenticating the terminal device based on the identity token.

39. The method according to any one of claims 34 to 38, wherein the allocation information comprises at least one of:
AI model information indicating information related to an AI model used by the terminal device;
an operation parameter indicating a model part that the terminal device needs to calculate for the AI model; or
connection information indicating another device that the terminal device needs to communicate with when executing the third AI service.

40. The method according to any one of claims 34 to 39, further comprising:
determining whether to accept the terminal device to join the first domain for executing the third AI service based on the first request, and
transmitting the allocation information to the terminal device when the terminal device is accepted to join.

41. A configuration apparatus, applied in a terminal device, the apparatus comprising:
a configuration information receiving module configured to receive configuration information from a network device, the configuration information comprising at least one of: an identifier of a first Artificial Intelligence (AI) service or first domain information corresponding to the first AI service,
wherein the first domain information corresponding to the first AI service is information related to a first domain for executing the first AI service.

42. The apparatus according to claim 41, wherein the first domain for executing the first AI service comprises at least one of: at least one service node for executing the first AI service or a resource corresponding to each service node.

43. The apparatus according to claim 42, wherein the resource corresponding to each service node comprises at least one of: a stored and/or used model, a data resource, a computing resource, or a communication resource.

44. The apparatus according to any one of claims 41 to 43, wherein the first domain information comprises at least one of: an identifier of the first domain, a condition for joining the first domain, or an identity token.

45. The apparatus according to any one of claims 41 to 44, wherein the configuration information further comprises a temporary device identifier used for the terminal device to join the first domain for executing the first AI service.

46. The apparatus according to any one of claims 41 to 45, further comprising:
a first information transmitting module configured to transmit first information to the network device, the first information comprising at least one of: an identifier of a service requested by the terminal device, an identifier of the terminal device, capability information of the terminal device, or condition information of the terminal device.

47. The apparatus according to claim 46, wherein the service requested by the terminal device comprises at least one of: an autonomous driving service, an Augmented Reality (AR) service, or a Virtual Reality (VR) service.

48. The apparatus according to claim 46 or 47, wherein the identifier of the terminal device comprises at least one of: an International Mobile Subscriber Identity (IMSI), a Globally Unique Temporary User Equipment Identity (GUTI), a Subscription Permanent Identifier (SUPI), or a Uniform Resource Identifier (URI) type of identifier.

49. The apparatus according to any one of claims 46 to 48, wherein the capability information of the terminal device comprises at least one of: a computing capability of the terminal device, a power capacity of the terminal device, a storage capability of the terminal device, or a data type of the terminal device.

50. The apparatus according to any one of claims 46 to 49, wherein the condition information of the terminal device comprises at least one of: a location of the terminal device, a speed of the terminal device, time of the terminal device, or a movement trajectory of the terminal device.

51. The apparatus according to any one of claims 46 to 50, wherein the service requested by the terminal device comprises the first AI service.

52. The apparatus according to any one of claims 46 to 51, wherein
the first information is carried in a registration request transmitted by the terminal device to the network device; and
the configuration information is carried in a registration response transmitted by the network device to the terminal device.

53. A configuration apparatus, applied in a network device, the apparatus comprising:
a configuration information transmitting module configured to transmit configuration information to a terminal device, the configuration information comprising at least one of: an identifier of a first Artificial Intelligence (AI) service or first domain information corresponding to the first AI service,
wherein the first domain information corresponding to the first AI service is information related to a first domain for executing the first AI service.

54. The apparatus according to claim 53, wherein the first domain for executing the first AI service comprises at least one of: at least one service node for executing the first AI service or a resource corresponding to each service node.

55. The apparatus according to claim 54, wherein the resource corresponding to each service node comprises at least one of: a stored and/or used model, a data resource, a computing resource, or a communication resource.

56. The apparatus according to any one of claims 53 to 55, wherein the first domain information comprises at least one of: an identifier of the first domain, a condition for joining the first domain, or an identity token.

57. The apparatus according to any one of claims 53 to 56, wherein the configuration information further comprises a temporary device identifier used for the terminal device to join the first domain for executing the first AI service.

58. The apparatus according to any one of claims 53 to 57, further comprising:
a first information receiving module configured to receive first information from the terminal device, the first information comprising at least one of: an identifier of a service requested by the terminal device, an identifier of the terminal device, capability information of the terminal device, or condition information of the terminal device.

59. The apparatus according to claim 58, wherein the service requested by the terminal device comprises at least one of: an autonomous driving service, an Augmented Reality (AR) service, or a Virtual Reality (VR) service.

60. The apparatus according to claim 58 or 59, wherein the identifier of the terminal device comprises at least one of: an International Mobile Subscriber Identity (IMSI), a Globally Unique Temporary User Equipment Identity (GUTI), a Subscription Permanent Identifier (SUPI), or a Uniform Resource Identifier (URI) type of identifier.

61. The apparatus according to any one of claims 58 to 60, wherein the capability information of the terminal device comprises at least one of: a computing capability of the terminal device, a power capacity of the terminal device, a storage capability of the terminal device, or a data type of the terminal device.

62. The apparatus according to any one of claims 58 to 61, wherein the condition information of the terminal device comprises at least one of: a location of the terminal device, a speed of the terminal device, time of the terminal device, or a movement trajectory of the terminal device.

63. The apparatus according to any one of claims 58 to 62, wherein the service requested by the terminal device comprises the first AI service.

64. The apparatus according to any one of claims 58 to 63, wherein
the first information is carried in a registration request transmitted by the terminal device to the network device; and
the configuration information is carried in a registration response transmitted by the network device to the terminal device.

65. The apparatus according to any one of claims 58 to 64, further comprising:
a first domain information receiving module configured to receive first domain information corresponding to a second AI service from an application server, the first domain information corresponding to the second AI service is information related to a first domain for executing the second AI service.

66. The apparatus according to claim 65, wherein the service requested by the terminal device comprises the second AI service.

67. The apparatus according to claim 65 or 66, wherein
the second AI service comprises the first AI service; or
the first AI service comprises the second AI service.

68. An allocation apparatus, applied in a terminal device, the apparatus comprising:
a first request transmitting module configured to transmit a first request to a network device, the first request being used to request to join a first domain for executing a third Artificial Intelligence (AI) service; and
an allocation information receiving module configured to receive allocation information from the network device.

69. The apparatus according to claim 68, wherein the first domain for executing the third AI service comprises at least one of: at least one service node for executing the third AI service or a resource corresponding to each service node.

70. The apparatus according to claim 69, wherein the resource corresponding to each service node comprises at least one of: a stored and/or used model, a data resource, a computing resource, or a communication resource.

71. The apparatus according to any one of claims 68 to 70, wherein the first request comprises at least one of: an identifier of the terminal device, a temporary device identifier, an identifier of the third AI service, capability information of the terminal device, condition information of the terminal device, an identifier of the first domain for executing the third AI service, or an identity token.

72. The apparatus according to any one of claims 68 to 71, wherein the allocation information comprises at least one of:
AI model information indicating information related to an AI model used by the terminal device;
an operation parameter indicating a model part that the terminal device needs to calculate for the AI model; or
connection information indicating another device that the terminal device needs to communicate with when executing the third AI service.

73. The apparatus according to any one of claims 68 to 72, wherein the allocation information comprises connection information, and wherein the apparatus further comprises: a calculation result exchanging module configured to exchange a calculation result of the AI model with another device indicated in the connection information.

74. An allocation apparatus, applied in a network device, the apparatus comprising:
a first request receiving module configured to receive a first request from a terminal device, the first request being used to request to join a first domain for executing a third Artificial Intelligence (AI) service; and
an allocation information transmitting module configured to transmit allocation information to the terminal device.

75. The apparatus according to claim 74, wherein the first domain for executing the third AI service comprises at least one of: at least one service node for executing the third AI service or a resource corresponding to each service node.

76. The apparatus according to claim 75, wherein the resource corresponding to each service node comprises at least one of: a stored and/or used model, a data resource, a computing resource, or a communication resource.

77. The apparatus according to any one of claims 74 to 76, wherein the first request comprises at least one of: an identifier of the terminal device, a temporary device identifier, an identifier of the third service, capability information of the terminal device, condition information of the terminal device, an identifier of the first domain for executing the third AI service, or an identity token.

78. The apparatus according to any one of claims 74 to 77, wherein the first request comprises an identity token; and wherein the apparatus further comprises:
an authenticating module configured to authenticate the terminal device based on the identity token.

79. The apparatus according to any one of claims 74 to 78, wherein the allocation information comprises at least one of:
AI model information indicating information related to an AI model used by the terminal device;
an operation parameter indicating a model part that the terminal device needs to calculate for the AI model; or
connection information indicating another device that the terminal device needs to communicate with when executing the third AI service.

80. The apparatus according to any one of claims 74 to 79, further comprising:
a device joining confirming module configured to determine whether to accept the terminal device to join the first domain for executing the third AI service based on the first request,
wherein the allocation information transmitting module is configured to transmit the allocation information to the terminal device when the terminal device is accepted to join.

81. A terminal device, comprising a processor and a transceiver connected to the processor, wherein
the transceiver is configured to receive configuration information from a network device, the configuration information comprising at least one of: an identifier of a first Artificial Intelligence (AI) service or first domain information corresponding to the first AI service,
wherein the first domain information corresponding to the first AI service is information related to a first domain for executing the first AI service.

82. A network device, comprising a processor and a transceiver connected to the processor, wherein
the transceiver is configured to transmit configuration information to a terminal device, the configuration information comprising at least one of: an identifier of a first Artificial Intelligence (AI) service or first domain information corresponding to the first AI service,
wherein the first domain information corresponding to the first AI service is information related to a first domain for executing the first AI service.

83. A terminal device, comprising a processor and a transceiver connected to the processor, wherein
the transceiver is configured to transmit a first request to a network device, the first request being used to request to join a first domain for executing a third Artificial Intelligence (AI) service; and
the transceiver is further configured to receive allocation information from the network device.

84. A network device, comprising a processor, and a transceiver connected to the processor, wherein
the transceiver is configured to receive a first request from a terminal device, the first request being used to request to join a first domain for executing a third Artificial Intelligence (AI) service; and
the transceiver is configured to transmit allocation information to the terminal device.

85. A computer-readable storage medium, having a computer program stored therein, the computer program being configured to be executed by a processor of a terminal device to implement the configuration method according to any one of claims 1 to 12.

86. A computer-readable storage medium, having a computer program stored therein, the computer program being configured to be executed by a processor of a network device to implement the configuration method according to any one of claims 13 to 27.

87. A computer-readable storage medium, having a computer program stored therein, the computer program being configured to be executed by a processor of a terminal device to implement the allocation method according to any one of claims 28 to 33.

88. A computer-readable storage medium, having a computer program stored therein, the computer program being configured to be executed by a processor of a network device to implement the allocation method according to any one of claims 34 to 40.
